# EUROPÄISCHE PATENTANMELDUNG

(11) **EP 0 887 019 A2**
(43) Veröffentlichungstag der Anmeldung: **30.12.1998**
(21) Anmeldenummer: 98108966.7
(22) Anmeldetag: 12.05.1998
(51) Int. Cl.: A23B 4/044

(54) **Verfahren und Vorrichtung zur Räucherbehandlung von Lebensmitteln**

(30) Priorität: 23.06.1997 DE 19726558
(71) Anmelder: VEMAG Maschinen- und Anlagenbau GmbH, 27283 Verden (DE)
(72) Erfinder: Grandt, Hans-Jürgen, 2280 Wedel (DE)
(74) Vertreter: Eisenführ, Speiser & Partner

(57) **Zusammenfassung**

Die Erfindung betrifft ein Verfahren zur Räucherbehandlung von Lebensmitteln, bei dem ein Lebensmittel mit im wesentlichen gasförmigem Reibrauch in Berührung gebracht wird. Erfindungsgemäß ist vorgesehen, daß das Lebensmittel zusätzlich mit Flüssigrauch behandelt wird.

Die Erfindung betrifft ferner eine Vorrichtung zur Räucherbehandlung von Lebensmitteln, mit mindestens einer Behandlungskammer zum Behandeln eines Lebensmittels mit Rauch, mit einem Reibraucherzeuger zum Erzeugen von im wesentlichen gasförmigen Reibrauch und Einleitungsmitteln zum Einleiten des erzeugten Reibrauches in die Behandlungskammer. Erfindungsgemäß sind Mittel zum Behandeln des Lebensmittels mit Flüssigrauch vorgesehen.

## Beschreibung

Die vorliegende Erfindung betrifft in einem ersten Aspekt ein Verfahren zur Räucherbehandlung von Lebensmitteln, bei dem ein Lebensmittel mit im wesentlichen gasförmigem Reibrauch in Berührung gebracht wird.

Die Erfindung betrifft in einem zweiten Aspekt eine Vorrichtung zur Räucherbehandlung von Lebensmitteln, mit mindestens einer Behandlungskammer zum Behandeln eines Lebensmittels mit Rauch.

Bei einem bekannten derartigen Verfahren bzw. einer bekannten Vorrichtung zur Räucherbehandlung wird im wesentlichen gasförmiger Rauch mit Hilfe eines sogenannten Glimmraucherzeugers erzeugt und das Lebensmittel während einer Räucherphase in einer Räucherkammer mit dem erzeugten Rauch behandelt. Ein Glimmraucherzeuger stellt zwar einen gasförmigen Rauch mit einer relativ hohen sogenannten Rauchdichte bereit, jedoch weist eine Räucherbehandlung mit Glimmrauch einige Nachteile auf. Einerseits sind aufwendige Maßnahmen zur Reinigung der bei der Räucherbehandlung entstehenden Abluft erforderlich sind, andererseits besteht eine recht große Brandgefahr. Ferner kann der bei diesem Verfahren entstehende gasförmige Rauch (Rauchgase) nicht in einem geschlossenen Kreislauf geführt werden, da die Rauchgase häufig zündfähige Gase in höherer Konzentration enthalten, die eine Explosion oder einen Brand in der Vorrichtung zur Räucherbehandlung verursachen können. Die Färbung der Oberfläche eines mit Glimmrauch behandelt Lebensmittels ist häufig nicht ausreichend und ungleichmäßig.

Weiterhin werden im Stand der Technik sogenannte Dampfraucherzeuger verwendet, die gegenüber den zuvor beschriebenen Glimmraucherzeugern insofern vorteilhaft sind, als eine Reinigung von Abgasen auf einfachere Weise möglich ist, da zur Reinigung der Abgase oder Abluft sogenannte Rauchwäscher verwendet werden können, die den dampfförmigen Rauch reinigen. Der Geschmack eines mit diesem Verfahren behandelten Lebensmittels ist akzeptabel, jedoch ist die Färbung der Oberfläche des Lebensmittels häufig unzureichend.

Weiterhin sind Räucherverfahren und -vorrichtungen bekannt, die sogenannte Reibraucherzeuger verwenden. Hierbei wird ein gasförmiger sogenannter Reibrauch erzeugt und mit dem Lebensmittel in Berührung gebracht, der eine relativ geringe Intensität aufweist. Die geringe Intensität des Reibrauchs hat zur Folge, daß die Oberflächenfärbung des zu behandelnden Lebensmittels häufig nicht ausreichend kräftig ist. Ferner ist für eine Räucherbehandlung aufgrund der geringen Intensität des gasförmigen Rauchs eine verhältnismäßig lange Behandlungszeit erforderlich.

Bei einem weiteren bekannten Verfahren wird das Lebensmittel zur Räucherbehandlung mit Flüssigrauch besprüht, so daß die Oberfläche des Lebensmittels benetzt wird und in dem Flüssigrauch enthaltene Geschmacks- und Farbstoffe in das Lebensmittel eindringen. Auf diese Weise wird generell eine verhältnismäßig gleichmäßige Färbung des Lebensmittels erreicht, jedoch hat das mit Flüssigrauch behandelte Lebensmittel einen eigentümlichen, nicht sehr guten Geschmack. In unerwünschter Weise ist erkennbar, daß Flüssigrauch zur Räucherbehandlung verwendet wurde.

Der vorliegenden Erfindung liegt die Aufgabe zugrunde, ein Verfahren und eine Vorrichtung der eingangs genannten Art anzugeben, welche die Nachteile des Standes der Technik weitgehend vermeiden und auf einfache Weise eine Räucherbehandlung ermöglichen, mit der ein optisch und geschmacklich attraktives optimales Lebensmittel herstellbar ist.

Diese Aufgabe wird gemäß des ersten Aspekts der Erfindung bei einem Verfahren der eingangs genannten Art dadurch gelöst, daß das Lebensmittel zusätzlich mit Flüssigrauch behandelt wird.

Die Erfindung wird gemäß des zweiten Aspekts der Erfindung bei einer Vorrichtung der eingangs genannten Art dadurch gelöst, daß Mittel zum Behandeln des Lebensmittels mit Flüssigrauch vorgesehen sind.

Mit Hilfe des erfindungsgemäßen Verfahrens bzw. der erfindungsgemäßen Vorrichtung läßt sich auf einfache Weise ein optisch und geschmacklich attraktives Lebensmittel auf einfache Weise herstellen. Erfindungsgemäß wird erreicht, daß durch die Behandlung des Lebensmittels mit gasförmigem Reibrauch der bei geräucherten Produkten erwünschte typische rauchige Geschmack und Geruch und gleichzeitig durch die Behandlung des Lebensmittels mit Flüssigrauch eine relativ gleichmäßige Färbung des Lebensmittels und somit ein optisch attraktives Produkt hergestellt wird. Erfindungsgemäß können die im Stand der Technik auftretenden Probleme der Abgasreinigung der sogenannten Glimmraucherzeuger sowie die Bereitstellung aufwendiger Rauchwäscher im Falle von Dampfraucherzeugern ebenso vermieden werden wie die langen erforderlichen Behandlungszeiten im Falle von Reibraucherzeugern. Die Erfindung vermeidet somit die Nachteile des Standes der Technik und verbindet deren Vorteile.

Das erfindungsgemäße Verfahren wird gemäß einer besonders bevorzugten Ausführungsform dadurch weitergebildet, daß das Lebensmittel zunächst mit Flüssigrauch und anschließend mit gasförmigem Reibrauch behandelt wird. Durch eine erste Räucherphase mit Flüssigrauch steigt die relative Luftfeuchtigkeit in der Behandlungskammer an, was zur Folge hat, daß bei der anschließenden Behandlung mit Reibrauch dieser wesentlich besser vom Lebensmittelprodukt aufgenommen wird, der Stoffübergang auf das Lebensmittelprodukt somit erheblich verbessert wird. Daraus resultieren geringere Räucherzeiten und somit ein erhöhter möglicher Produktdurchsatz.

Alternativ kann das Lebensmittel zunächst auch mit gasförmigem Reibrauch und anschließend mit Flüssigrauch behandelt werden, oder es kann gleichzeitig eine Behandlung mit Flüssigrauch und mit gasförmigem Reibrauch vorgenommen werden.

Besonders bevorzugt ist eine Ausführungsform bei der das Lebensmittel vor der Behandlung mit Rauch einer Trocknung unterzogen wird. Vorzugsweise wird die Trocknung mit heißer Luft ausgeführt. Auf diese Weise lassen sich erheblich kürzere Räucherzeiten verwirklichen, da dem Lebensmittel im oberflächennahen Bereich durch die Trocknung Feuchtigkeit entzogen wird und es dadurch während der sich an die Trocknung anschließenden Räucherbehandlung zu einem deutlich besseren Stoffübergang der Rauchbestandteile auf das Lebensmittelprodukt kommt, da größere Konzentrationsgradienten, die für den Stoffübergang maßgeblich sind, erzielt werden. Die Räucherzeiten sind dadurch geringer.

Die Flüssigrauchbehandlung läßt sich gemäß einer Weiterbildung dadurch verbessern, daß der Flüssigrauch in zerstäubter Form auf das Lebensmittel aufgesprüht wird, da auf diese Weise eine feinere Verteilung des Flüssigrauchs auf dem Produkt und damit eine gleichmäßigere Behandlung möglich ist. Zweckmäßigerweise wird der Flüssigrauch mittels einer Zerstäuber-Düse zerstäubt und zusätzlich mittels Sprühluft in einer Behandlungskammer verteilt. Diese Ausführungsform wird weitergebildet, indem der Flüssigrauch im wesentlichen in horizontaler Richtung versprüht wird. Hierbei können mehrere Düsen im Bereich von Seitenwänden der Behandlungskammer angeordnet sein und das Lebensmittelprodukt von mehreren Seiten besprüht werden.

Gemäß einer alternativen Ausführungsform der Erfindung wird zur Räucherbehandlung ein Gasstrom erzeugt, welchem der Reibrauch und/oder der Flüssigrauch zugegeben wird und welcher eine das Lebensmittel aufnehmende Behandlungskammer durchströmt.

In vorteilhafter Weise wird der Gasstrom in einem geschlossenen Kreislauf geführt. Der Flüssigrauch wird entweder innerhalb oder außerhalb der Behandlungskammer in den Gasstrom eingesprüht. Auf diese Weise wird die zur Behandlung erforderliche Rauchmenge verringert und die Umwelt weniger durch Abgase belastet.

Alternativ können der Reibrauch und der Flüssigrauch miteinander vermischt werden, beispielsweise in einer Mischkammer, und anschließend dem in die Behandlungskammer strömenden Gasstrom zugegeben werden.

Vorzugsweise wird das Lebensmittel nach der Behandlung mit Rauch in erhitztem Gas gekocht, um es vollständig zu garen. Wird das Verfahren so geführt, daß während des Kochens Bestandteile des Rauchs innerhalb der Behandlungskammer kondensiert werden, der zuvor bei der Behandlung mit Rauch entstanden ist, kann auf eine Entsorgung des Rauchgases verzichtet werden, so daß die Anlage insgesamt kostengünstiger wird.

Die erfindungsgemäße Vorrichtung wird dadurch weitergebildet, daß die Flüssigrauch-Behandlungs-Mittel im wesentlichen einen Flüssigrauch-Speicher-Behälter, dem Speicher-Behälter zugeordnete Förder-Mittel und mindestens eine den Förder-Mitteln zugeordnete Düse zum Abgeben des Flüssigrauchs umfassen. In vorteilhafter Weise ist die Düse innerhalb der Behandlungskammer angeordnet, so daß Flüssigrauch direkt in die Behandlungskammer einbringbar ist. Eine bessere Verteilung des Flüssigrauchs ergibt sich, wenn die Düse eine Zweistoffdüse, bei der der Flüssigrauch mit Hilfe eines Gases, vorzugsweise Druckluft, zerstäubt wird. In vorteilhafter Weise ist die Düse an einer Seitenwand der Behandlungskammer angeordnet.

Gemäß einer alternativen Ausführungsform ist die Düse an oder innerhalb einer in die Behandlungskammer führende Zuführleitung angeordnet und ist ein Gasstrom in der Zuführleitung erzeugbar, so daß Flüssigrauch in die Zuführleitung und durch diese in die Behandlungskammer einleitbar ist. Bei dieser Ausführungsform ist die Düse nicht direkt in der Behandlungskammer angeordnet. Bei dem Gasstrom kann es sich um einen sogenannten Umluftstrom handeln, das heißt, einer Kreislaufströmung, in die der Flüssigrauch eingeleitet wird. Bei dieser Ausführungsform kann eine Ableitung von Rauchgasen an die Umgebung weitgehend vermieden werden.

Eine Weiterbildung sieht vor, daß der Reibraucherzeuger mit der Zuführleitung gekoppelt ist, so daß der erzeugte Reibrauch durch die Zuführleitung in die Behandlungskammer förderbar ist. Auf diese Weise können der gasförmige Rauch und der Flüssigrauch durch eine gemeinsame Zuführleitung in die Behandlungskammer eingebracht werden.

Gemäß einem weiteren Ausführungsbeispiel der erfindungsgemäßen Vorrichtung sind eine erste und eine zweite Behandlungskammer vorgesehen und sind die Flüssigrauch-Behandlungs-Mittel der ersten Behandlungskammer und der Reibraucherzeuger und die Einleitungsmittel der zweiten Behandlungskammer zugeordnet. Eine derartige Vorrichtung bietet sich an, wenn die Verfahrensschritte Reibrauchbehandlung und Flüssigrauchbehandlung nach einander in getrennten Behandlungskammern ausgeführt werden sollen. Hierbei kann eine mechanische Förderungseinrichtung zum Fördern des Lebensmittels durch die Vorrichtung von der ersten in die zweite Behandlungskammer und umgekehrt vorgesehen sein.

Die Erfindung wird nachstehend anhand von Ausführungsbeispielen des erfindungsgemäßen Verfahrens und der erfindungsgemäßen Vorrichtung zur Räucherbehandlung von Lebensmitteln unter Bezugnahme auf die beiliegenden Zeichnungen beschrieben. Es zeigen:
- Figur 1: ein Ausführungsbeispiel einer erfindungsgemäßen Vorrichtung zur Räucherbehandlung von Lebensmitteln in einer schematischen Ansicht;
- Figur 2: das in Figur 1 dargestellte Ausführungsbeispiel der erfindungsgemäßen Vorrichtung in einer Seitenansicht;
- Figur 3: eine Draufsicht auf einen Teil einer erfindungsgemäßen Vorrichtung mit einer Flüssigrauchanlage;
- Figur 4: eine in einer Behandlungskammer der erfindungsgemäßen Vorrichtung angeordneten Düse der in Figur 3 dargestellten Flüssigrauchanlage in einer Teilschnittdarstellung;
- Figur 5: eine schematische Darstellung einer Flüssigrauchanlage;
- Figur 6: eine weitere Darstellung eines Teils der in Figur 5 dargestellten Flüssigrauchanlage für eine erfindungsgemäße Vorrichtung zur Räucherbehandlung;
- Figur 7: eine weitere Darstellung eines Teils der Flüssigrauchanlage;
- Figur 8: eine Darstellung einer Düse der Flüssigrauchanlage aus Figur 7 als Draufsicht; und
- Figur 9: die in Figur 8 dargestellte Düse in einer Seitenansicht als Teilschnittdarstellung.

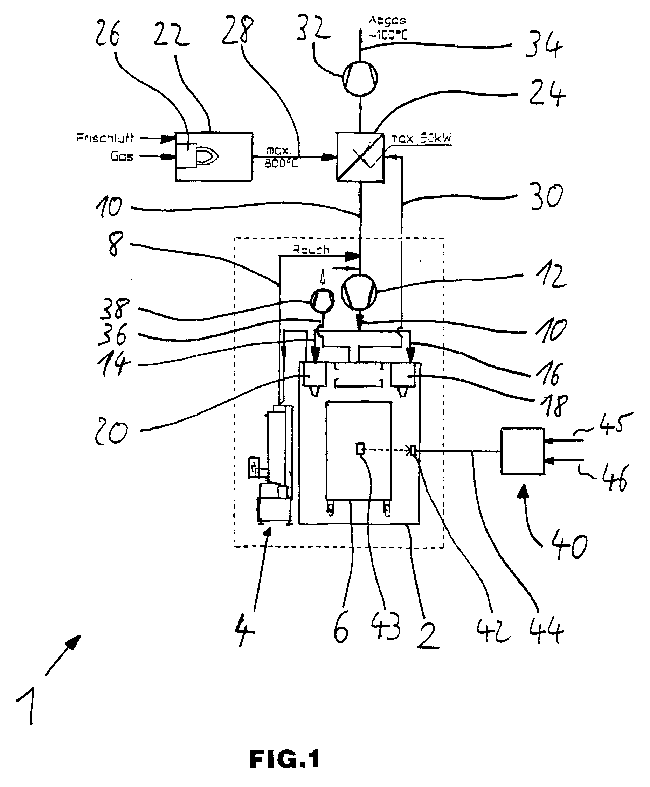

Die in Figur 1 schematisch dargestellte Vorrichtung 1 zur Räucherbehandlung von Lebensmitteln, beispielsweise zum Räuchern von Fleisch oder Fischprodukten, weist eine verschließbare Behandlungskammer 2, in welcher die Lebensmittel zur Behandlung mit Rauch in Berührung gebracht werden, einen Reibraucherzeuger 4 zum Erzeugen von im wesentlichen gasförmigem, sogenanntem Reibrauch, Einleitungs-Mittel zum Einleiten des in dem Reibraucherzeuger 4 erzeugten Reibrauches in die Behandlungskammer 2 sowie Mittel zum Behandeln des Lebensmittels mit Flüssigrauch auf. In die Behandlungskammer 2 kann ein Wagen 6 eingeschoben werden, von dem die zu behandelnden Lebensmittel getragen werden.

Der Reibraucherzeuger 4 erzeugt im Betrieb einen im wesentlichen gasförmigen Räucherrauch, bei dem es sich um ein Gemisch aus Verbrennungsgasen, Aerosolen, ggf. Partikeln und anderen Stoffen handelt. Der Rauch wird aus Holzstäben erzeugt, die in einem Magazin gespeichert und mit Hilfe eines automatischen Vorschubsystems kontinuierlich zugeführt werden. An einem mittels eines Elektromotors antreibbaren Reibrads werden die Holzstäbe durch zwischen der Oberfläche des Reibrades und einem Holzstab entstehende Reibungswärme verbrannt und in Reibrauch umgewandelt.

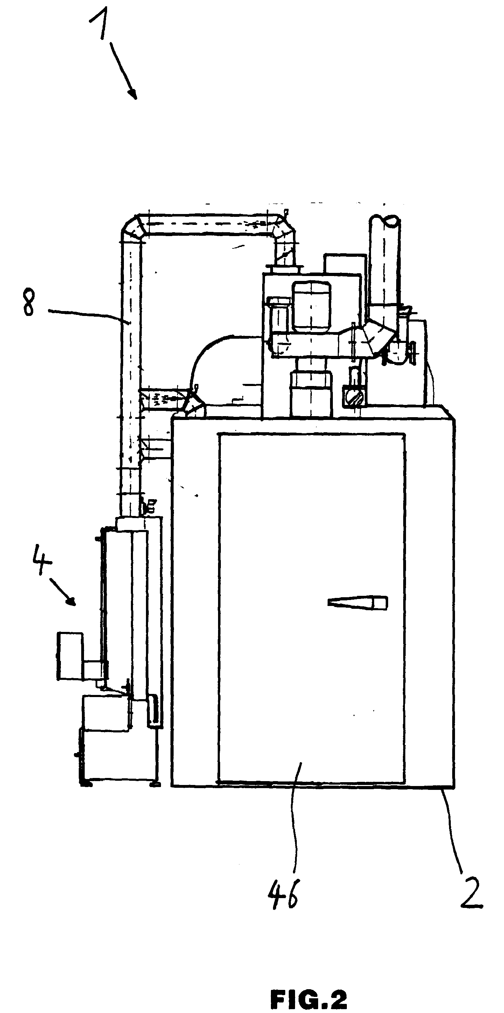

Die Einleitungs-Mittel zum Einleiten des erzeugten Reibrauches in die Behandlungskammer 2 umfassen im wesentlichen eine in den Figuren 1 und 2 dargestellte, an den Reibraucherzeuger 4 angeschlossene Rohrleitung 8, eine Zuführleitung 10, in die die Rohrleitung 8 mündet, sowie ein Gebläse 12, das in die Zuführleitung 10 geschaltet ist. Stromabwärts von dem Gebläse 12 vertweigt sich die Zuführleitung 10 in mehrere Leitungen 14, 16, die in Düsenanordnungen 18, 20 münden, welche innerhalb der Behandlungskammer 2 angeordnet sind und mehrere Auslässe aufweisen, durch die der Reibrauch in die Behandlungskammer 2 eingeleitet werden kann.

In Figur 1 ist im oberen Teil eine Einrichtung zur Erzeugung von erhitztem Gas dargestellt, die im wesentlichen eine Brennkammer 22 mit einem Brenner 26 sowie einen Gas/Gas-Wärmeübertrager 24 umfaßt. In die Brennkammer 22 ist Frischluft sowie ein brennbares Gas einleitbar, die in der Brennkammer 22 verbrannt werden. Die bei der Verbrennung entstehenden Verbrennungsgase werden über eine Leitung 28 dem Wärmeübertrager 24 zugeleitet, in welchem sie durch den Wärmeübertrager 24 durchströmendes Räuchergas zusätzlich erwärmt werden können, das durch Leitung 30 aus der Behandlungskammer 2 in den Wärmeübertrager 24 einleitbar ist. Mit Hilfe eines Gebläses 32 wird das sich in dem Wärmeübertrager 24 abkühlende Rauchgas über eine Leitung 34 abgegeben. Alternativ kann Rauchgas aus der Behandlungskammer 2 mittels eines Gebläses 38 durch eine Leitung 36 abgesaugt werden.

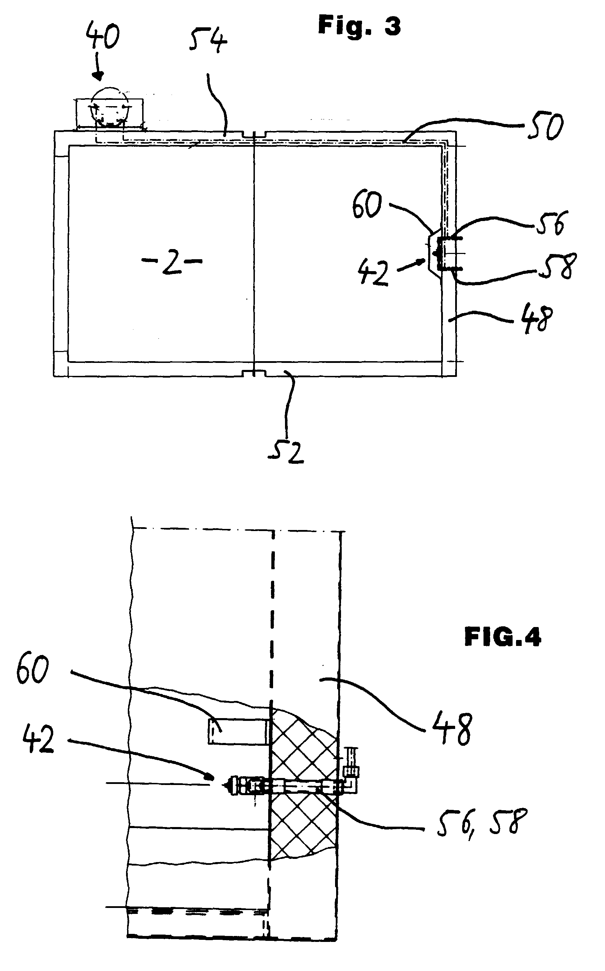

Die Mittel zum Behandeln des Lebensmittels mit Flüssigrauch umfassen im wesentlichen eine Flüssigrauchanlage 40, mittels derer Flüssigrauch in die Behandlungskammer 2 einbringbar ist. Im Ausführungsbeispiel wird - wie noch im einzelnen anhand der Figuren 3 bis 9 beschrieben wird - Flüssigrauch in flüssiger Form mit Hilfe einer Düse 42, die innerhalb der Behandlungskammer 2 angeordnet ist, in Richtung auf die zu behandelnden Lebensmittel versprüht. Die Düse 42 wird über eine Leitung 44 mit Flüssigrauch sowie Druckluft zum Versprühen des aus der Düse 42 austretenden Flüssigrauchs gespeist. Die Flüssigrauchanlage 40 wird mit Druckluft und Flüssigrauch beaufschlagt, wie durch die Pfeile 45 und 46 angedeutet ist.

Figur 2 zeigt zusätzlich zu den zuvor anhand der Fig. 1 beschriebenen Komponenten eine die Behandlungskammer 2 verschließende Tür 46, sowie die Einleitungs-Mittel zum Einleiten des Reibrauches in die Behandlungskammer 2.

Die Figuren 3 und 4 veranschaulichen die Anordnung der Komponenten der Flüssigrauchanlage 40 relativ zur Behandlungskammer 2. Aus der Draufsicht der Figur 3 ist ersichtlich, daß die Düse 42 innerhalb der Behandlungskammer und beabstandet zu den unten im einzelnen beschriebenen weiteren Komponenten der Flüssigrauchanlage 40 an einer Rückwand 48 der Behandlungskammer 2 angeordnet ist. Die Düse 42 ist mittels schematisch dargestellter Anschlußleitungen 50 mit den weiteren Komponenten der Flüssigrauchanlage 40 verbunden.

Die Düse 42 könnte in nicht dargestellter Weise alternativ an anderen Orten innerhalb der Behandlungskammer 2 angeordnet sein, beispielsweise an den Seitenwänden 52, 54 der Behandlungskammer 2. Ferner können mehrere Düsen 42 innerhalb der Behandlungskammer 2 vorgesehen sein.

Wie Figur 4 veranschaulicht, ist die Düse 42 durch die Rückwand 48 durchdringende Leitungsabschnitte 56, 58 (vgl. auch Figur 3) mit Flüssigrauch und Druckluft beaufschlagbar. Oberhalb von der Düse 42 ist ein Abstandshalter 60 an der Rückwand 48 befestigt, beispielsweise angeschraubt, um eine Beschädigung der Düse 42 zu verhindern, die durch in die Behandlungskammer 2 eingeschobene Wagen 6 oder andere Gegenstände, die mit der Düse 42 in Berührung kommen können, verursacht werden können. Der Abstandshalter 60 ist, wie Figur 3 zeigt, so gekrümmt, daß die Düse 42 und die Leitungsabschnitte 56, 58 geschützt werden.

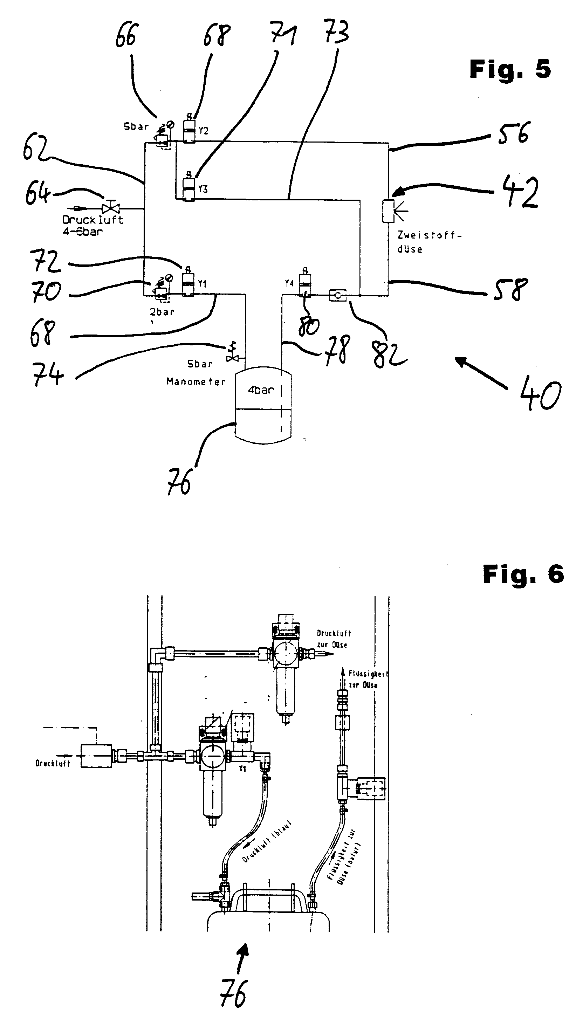

Figur 5 zeigt die wesentlichen Komponenten der Flüssigrauchanlage 40 schematisch. Druckluft aus einer nicht dargestellten Druckluftquelle liegt an einer sich verzweigenden Leitung 62 an. Die Druckluftquelle kann mittels eines Ventil 64 von Leitung 62 getrennt werden.

Ein Zweig der Leitung 62 führt über ein einen Druckminderer 66 mit Manometer und über ein in dem Leitungsabschnitt 56 angeordnetes elektromagnetisch betätigbares Magnetventil 68 zu der innerhalb der Behandlungskammer 2 (Figuren 3 und 4) angeordneten Düse 42, die als sogenannte Zweistoff-Zerstäuberdüse ausgebildet ist.

Die Druckluftquelle ist ferner über eine Leitung 68, in der ein Druckminderer 70 mit Manometer, ein ebenfalls elektromagnetisch betätigbares Magnetventil 72 sowie ein Sicherheitsventil 74 als Überdrucksicherung angeorndet sind, mit einem Speicherbehälter 76 zum Speichern von Flüssigrauch verbindbar. In den als Flüssigkeit in dem Speicherbehälter 76 vorliegenden Flüssigrauch ist eine teilweise innerhalb des Speicherbehälters 76 angeordnete Leitung 78 eingetaucht. In die Leitung 78 sind ein magnetisch betätigbares Magnetventil 80 sowie ein Rückschlagventil 82 geschaltet. Der Leitungsabschnitt 58 verbindet die Leitung 78 mit der Düse 42, die somit einerseits mit Druckluft über den Leitungsabschnitt 56 und andererseits mit Flüssigrauch über den Leitungsabschnitt 58 beaufschlagbar ist.

Werden Flüssigrauch und Druckluft zu der Düse 42 gefördert, so wird der aus einer Düsenöffnung der Düse 42 austretende Flüssigrauch mittels eines Stroms aus Luft fein zerstäubt und in den Innenraum der Behandlungskammer 2 gefördert, so daß das zu behandelnde Lebensmittel mit Flüssigrauch in Berührung gebracht wird. Eine Leitung 73, in die ein weiteres Magnetventil 71 geschaltet ist, verbindet die Leitungen 62 und den Leitungsabschnitt 58, so daß in letzterem befindlicher Flüssigrauch zur Reinigung mittels Druckluft durch die Düse 42 herausgepreßt werden kann.

Figur 6 zeigt einen Teil der in Figur 5 dargestellten Flüssigrauchanlage 40. Nicht dargestellt sind die Leitungsabschnitte 56 und 58 sowie die Düse 42.

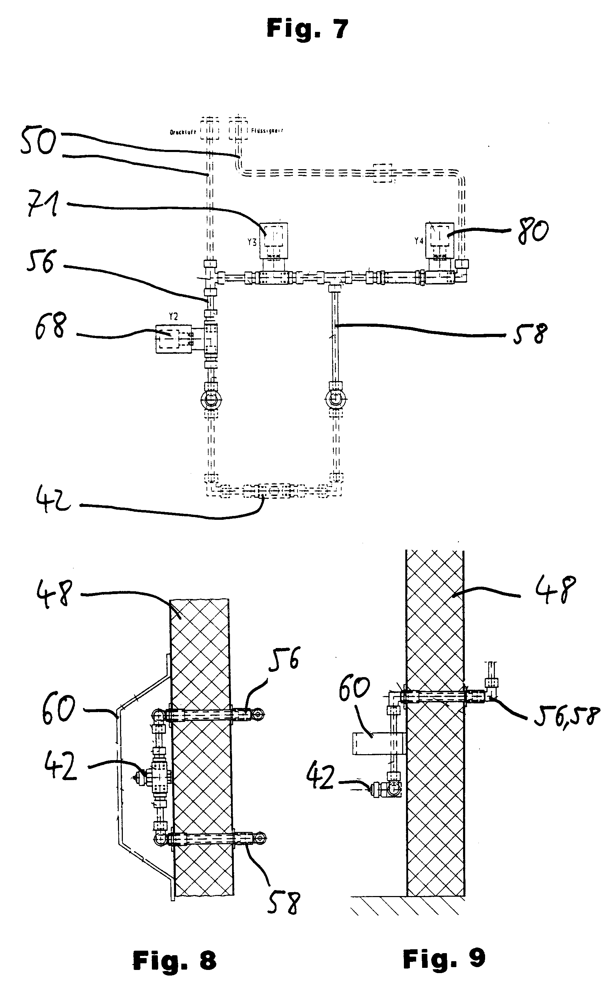

Die Figuren 7 bis 9 veranschaulichen ein weiteres Ausführungsbeispiel einer erfindungsgemäßen Flüssigrauchanlage 40, bei der im wesentlichen die gleichen Komponenten vorgesehen sind, wie bei der zuvor anhand der Figuren 3 bis 6 beschriebenen Flüssigrauchanlage 40, bei der jedoch eine andere Anordnung der Einzelkomponenten realisiert ist.

Figur 7 zeigt, daß in der Nähe des Ventils 42 außerhalb der Behandlungskammer 6 das Magnetventil 68, das Magnetventil 71, das Magnetventil 80 sowie die Leitungsabschnitte 56 und 58 angeordnet sind, während die anderen Komponeten der Flüssigrauchanlage 40 in größerem Abstand zu dem Ventil 42 angeordnet sind, wie beispielsweise in Figur 3 dargestellt ist. Die gestrichelt in Figur 7 dargestellten Leitungen entsprechen den Anschlußleitungen 50 aus Figur 3.

Die Figuren 8 und 9 veranschaulichen in Teilschnittdarstellungen die Durchführung der Leitungsabschnitte 56, 58 durch die Rückwand 48 sowie des Abstandshalters 60.

Bei einem nicht dargestellten, alternativen Ausführungsbeispiel der erfindungsgemäßen Vorrichtung ist als Teil der Flüssigrauchanlage 40 eine Flüssigkeits-Leitung vorgesehen, die eine Verbindung zwischen einem Speicherbehälter (vgl. 76 in Fig. 5) für Flüssigrauch und der Zuführleitung 10 herstellt, so daß Flüssigrauch in die Zuführleitung 10 eingeleitet werden kann. Durch diese - nicht dargestellte - Leitung kann Flüssigrauch in die Zuführleitung 10 und mittels des Gasstroms in der Zuführleitung 10, der mit Hilfe des Gebläses 12 erzeugt wird, durch die sich an die Zuführleitung 10 anschließenden Leitungen 10 und 16 und die Düsenanordnung 18 und 20 in die Behandlungskammer 2 eingeleitet werden, um das Lebensmittel mit Flüssigrauch zu behandeln. In nicht dargestellter Weise könnte die Zuführleitung 10 auch direkt ohne Zwischenschaltung der Düsenanordnungen 18 und 20 in den Innenraum der Behandlungskammer eingeleitet werden.

Nachfolgend ist das erfindungsgemäße Verfahren anhand der Figuren 1 bis 9 beschrieben:

Vor der eigentlichen Räucherbehandlung von Lebensmitteln wird die in Figur 2 dargestellte Tür 46 der Behandlungskammer 2 geöffnet und ein Lebensmittel tragender Wagen 6 (Figur 1) in den Innenraum der Behandlungskammer 2 eingeschoben. Nach dem Schließen der Tür 46 kann das Lebensmittel mit Reibrauch aus dem Reibraucherzeuger 4 sowie mit Hilfe der Flüssigrauchanlage 40 in den Innenraum der Behandlungskammer 2 eingeleiteten Flüssigrauch behandelt werden.

Insbesondere aus Figur 1 ist ersichtlich, daß zur Räucherbehandlung in der Zuführleitung 10 ein Gasstrom erzeugt wird, welchem der in dem Reibraucherzeuger 4 erzeugte Reibrauch durch die Leitung 8 zugegeben wird. Das in der Zuführleitung 10 entstehende Gemisch aus Gas und Reibrauch wird von dem Gebläse 12 angesaugt und durch die Leitungen 14, 16 in die Düsenanordnungen 18, 20 innerhalb der Behandlungskammer 2 in diese eingeleitet. Nach dem Einleiten des Gasstroms kommt das Gasgemisch einschließlich des Reibrauchs mit den von dem Wagen 6 getragenen Lebensmitteln in Berührung. Dabei gehen Bestandteile des Räucher-Gases auf das Lebensmittel über, das dadurch räucherbehandelt wird.

Das Lebensmittel kann wahlweise zunächst mit Flüssigrauch und anschließend mit gasförmigem Rauch oder zunächst mit gasförmigem Reibrauch und anschließend mit Flüssigrauch oder gleichzeitig mit Flüssigrauch und mit gasförmigem Reibrauch behandelt werden.

Zur Flüssigrauchbehandlung der Lebensmittel kann der Flüssigrauch vorzugsweise in zerstäubter Form auf das Lebensmittel aufgesprüht werden durch die Mittel zum Behandeln des Lebensmittels mit Flüssigrauch, die im wesentlichen die Flüssigrauchanlage 40 (Figur 1) umfassen. Die Flüssigrauchanlage 40 besteht im wesentlichen aus dem in den Figuren 5 und 6 dargestellten Flüssigrauch-Speicherbehälter 76, diesem zugeordnete Förder-Mittel und mindestens eine den Förder-Mitteln zugeordnete Düse 42, 43 zum Abgeben des Flüssigrauchs innerhalb der Behandlungskammer 2. Die Förder-Mittel umfassen im Ausführungsbeispiel die nicht dargestellte Druckluftquelle, die Leitung 68, mit deren Hilfe der Speicherbehälter 76 derart mit Druck beaufschlagbar ist, so daß Flüssigkeit aus dem Speicherbehälter 76 herausgepreßt wird, die Flüssigkeits-Leitung 78 und 82 sowie die in den angesprochenen Leitungen liegenden Druckminderer und Ventile. Alternativ könnten die Förder-Mittel eine Flüssigkeits-Förderpumpe aufweisen.

Wird der Speicherbehälter 76 mit Druckluft beaufschlagt, so wird bei geöffnetem Magnetventil 80 bei ausreichenden Druck der Druckluft Flüssigrauch durch die Leitungen 78 und 58 zu der Düse 42 gefördert und tritt durch eine Düsenöffnung mit verhältnismäßig hoher Geschwindigkeit aus und wird in Richtung auf das zu behandelnde Lebensmittel geschleudert. Gleichzeitig wird bei geöffnetem Magnetventil 68 Druckluft durch die Leitungen 62 und den Leitungsabschnitt 56 zu der Zweistoff-Düse 42 gefördert und sorgt durch Einwirkung eines Druckluftstroms auf den Flüssigrauch durch eine zusätzliche Verteilung des Flüssigrauchs, beispielsweise durch ein Versprühen oder Vernebeln oder durch einen zusätzlichen Impuls auf die zerstäubten Flüssigkeitströpfchen, um eine größere Reichweite der Flüssigkeitströpfchen zu erzielen, so daß entfernt liegende Teile des zu behandelnden Lebensmittels mit Flüssigrauch benetzt werden.

In nicht dargestellter Weise könnte der Gasstrom, der durch das Gebläse 12 erzeugt wird, auch in einem geschlossenen Kreislauf geführt werden. Alternativ kann der Flüssigrauch auch innerhalb der Behandlungskammer 2 in den durch das Gebläse 12 in der Zuführleitung 10 erzeugten Gasstrom eingeleitet und anschließend dem Lebensmittel zugeleitet werden.

Das Lebensmittel kann vor, nach oder während der Räucherbehandlung mit erhitztem Gas gekocht werden, welches in der Brennkammer 22 sowie dem Wärmeübertrager 24 erzeugt und durch die Zuführleitung 10 in die Räucherkammer 2 eingeleitet wird. Die Temperatur des erhitzten Gases kann dabei so gewählt werden, daß während des Kochens Bestandteile des gasförmigen Rauchs, der zuvor bei der Behandlung mit Rauch entstanden ist, kondensiert werden.

Vor der Behandlung mit Rauch kann das Lebensmittel ferner einer Trocknung unterzogen werden, die mit heißem Gas, vorzugsweiser erhitzter Luft durchgeführt wird, das ebenfalls in der Brennkammer 22 und dem Wärmeübertrager 24 erzeugt worden ist. Wird anschließend die Räucherbehandlung vorgenommen, so findet ein besonders effektiver Stoffübergang auf das Lebensmittel statt, so daß ein besonders schmackhaftes Lebensmittel hergestellt werden kann.

Zur automatischen Durchführung des erfindungsgemäßen Verfahrens können einige Komponenten der erfindungsgemäßen Vorrichtung mit Hilfe einer nicht dargestellten Steuerungs- und Regelungseinrichtung gesteuert werden. Beispielsweise können die Zeitdauern der einzelnen Verfahrensschritte, die Temperaturen der Stoffströme, insbesondere der in die Behandlungskammer 2 eingeleiteten Stoffströme, sowie deren Zusammensetzungen, Feuchtergrade und dergleichen mit Hilfe von nicht dargestellten Meßwertaufnehmern aufgenommen und mit Hilfe der Steruerungs- und Regelungseinrichtung variiert und geregelt werden.

## Patentansprüche

1. Verfahren zur Räucherbehandlung von Lebensmitteln,
bei dem ein Lebensmittel mit im wesentlichen gasförmigem Reibrauch in Berührung gebracht wird,
dadurch gekennzeichnet, daß das Lebensmittel zusätzlich mit Flüssigrauch behandelt wird.

2. Verfahren nach Anspruch 1,
dadurch gekennzeichnet, daß das Lebensmittel zunächst mit Flüssigrauch und anschließend mit gasförmigem Reibrauch behandelt wird.

3. Verfahren nach Anspruch 1,
dadurch gekennzeichnet, daß das Lebensmittel zunächst mit gasförmigem Reibrauch und anschließend mit Flüssigrauch behandelt wird.

4. Verfahren nach Anspruch 1,
dadurch gekennzeichnet, daß das Lebensmittel gleichzeitig mit Flüssigrauch und mit gasförmigem Reibrauch behandelt wird.

5. Verfahren nach Anspruch 2,
dadurch gekennzeichnet, daß das Lebensmittel nach der Behandlung mit gasförmigem Reibrauch erneut mit Flüssigrauch behandelt wird.

6. Verfahren nach mindestens einem der vorstehenden Ansprüche,
dadurch gekennzeichnet, daß das Lebnsmittel vor der Behandlung mit Rauch einer Trocknung unterzogen wird.

7. Verfahren nach Anspruch 6,
dadurch gekennzeichnet, daß die Trocknung mit heißer Luft ausgeführt wird.

8. Verfahren nach mindestens einem der vorstehenden Ansprüche,
dadurch gekennzeichnet, daß zur Flüssigrauchbehandlung der Flüssigrauch in zerstäubter Form auf das Lebensmittel aufgesprüht wird.

9. Verfahren nach Anspruch 8,
dadurch gekennzeichnet, daß der Flüssigrauch mittels einer Zerstäuber-Düse (44,43) fein zerstäubt und zusätzlich mittels Sprühluft in einer das Lebensmittel aufnehmenden Behandlungskammer (2) verteilt wird.

10. Verfahren nach Anspruch 9,
dadurch gekennzeichnet, daß Flüssigrauch im wesentlichen in horizontaler Richtung in die Behandlungskammer (2) gesprüht wird.

11. Verfahren nach mindestens einem der vorstehenden Ansprüche,
dadurch gekennzeichnet, daß zur Räucherbehandlung ein Gasstrom erzeugt wird, welchem der Reibrauch und/oder der Flüssigrauch zugegeben wird und welcher eine das Lebensmittel aufnehmende Behandlungskammer (2) durchströmt.

12. Verfahren nach Anspruch 11,
dadurch gekennzeichnet, daß der Gasstrom in einem geschlossenen Kreislauf geführt wird.

13. Verfahren nach Anspruch 11 oder 12,
dadurch gekennzeichnet, daß der Reibrauch und/oder der Flüssigrauch innerhalb oder außerhalb der Behandlungskammer (2) dem Gasstrom zugegeben wird.

14. Verfahren nach einem der Ansprüche 11 bis 13,
dadurch gekennzeichnet, daß der Reibrauch und der Flüssigrauch miteinander vermischt und anschließend dem Gasstrom zugegeben werden.

15. Verfahren nach mindestens einem der vorstehenden Ansprüche,
dadurch gekennzeichnet, daß das Lebensmittel nach der Behandlung mit Rauch in erhitztem Gas gekocht wird.

16. Verfahren nach Anspruch 15,
dadurch gekennzeichnet, daß während des Kochens Bestandteile des Rauchs kondensiert werden, der zuvor bei der Behandlung mit Rauch entstanden ist.

17. Vorrichtung zur Räucherbehandlung von Lebensmitteln,
mit mindestens einer Behandlungskammer (2) zum Behandeln eines Lebensmittels mit Rauch,
mit einem Reibraucherzeuger (4) zum Erzeugen von im wesentlichen gasförmigen Reibrauch und Einleitungsmitteln (8 - 20) zum Einleiten des erzeugten Reibrauches in die Behandlungskammer (2),
gekennzeichnet durch Mittel (40,42,43,44,76) zum Behandeln des Lebensmittels mit Flüssigrauch.

18. Vorrichtung nach Anspruch 17,
dadurch gekennzeichnet, daß die Flüssigrauch-Behandlungs-Mittel (40,42,43,44,76) im wesentlichen einen Flüssigrauchspeicherbehälter (76), dem Speicherbehälter (76) zugeordnete Förder-Mittel zum Fördern des Flüssigrauchs und mindestens eine den Förder-Mitteln zugeordnete Düse (42,43) zum Abgeben des Flüssigrauchs umfassen.

19. Vorrichtung nach Anspruch 18,
dadurch gekennzeichnet, daß die Düse (42,43) innerhalb der Behandlungskammer (2) angeordnet ist, so daß Flüssigrauch direkt in die Behandlungskammer (2) einbringbar ist.

20. Vorrichtung nach Anspruch 19,
dadurch gekennzeichnet, daß die Düse (42,43) eine Zweistoffdüse ist, bei der der Flüssigrauch mit Hilfe eines Gases, vorzugsweise Druckluft, zerstäubt wird.

21. Vorrichtung nach Anspruch 19 oder 20,
dadurch gekennzeichnet, daß die Düse (42,43) an einer Seitenwand (50,52) oder Rückwand (48) der Behandlungskammer (2) angeordnet ist.

22. Vorrichtung nach Anspruch 17 oder 18,
dadurch gekennzeichnet, daß die Düse (42,43) an oder innerhalb einer in die Behandlungskammer (2) führende Zuführleitung (10) angeordnet ist, und daß ein Gasstrom in der Zuführleitung (10) erzeugbar ist, so daß Flüssigrauch in die Zuführleitung (10) und durch diese in die Behandlungskammer (2) einleitbar ist.

23. Vorrichtung nach Anspruch 22,
dadurch gekennzeichnet, daß der Reibraucherzeuger (4) mit der Zuführleitung (10) gekoppelt ist, so daß der erzeugte Reibrauch durch die Zuführleitung (10) in die Behandlungskammer (2) förderbar ist.

24. Vorrichtung nach mindestens einem der vorstehenden Ansprüche 18 bis 24,
dadurch gekennzeichnet, daß eine erste und eine zweite Behandlungskammer vorgesehen sind und daß die Flüssigrauch-Behandlungs-Mittel der ersten Behandlungskammer und der Reibraucherzeuger und die Einleitungsmittel der zweiten Behandlungskammer zugeordnet ist.

25. Vorrichtung nach einem der vorstehenden Ansprüche 18 bis 25,
gekennzeichnet durch eine Förderungseinrichtung zum Fördern des Lebensmittels durch die Vorrichtung.
